# EUROPÄISCHE PATENTSCHRIFT

(11) **EP 0 708 222 B1**
(45) Veröffentlichungstag und Bekanntmachung des Hinweises auf die Patenterteilung: **05.03.1997**
(21) Anmeldenummer: 95115712.2
(22) Anmeldetag: 05.10.1995
(51) Int. Cl.: E06B 3/82, E06B 5/16, E06B 5/18, B32B 21/13

(54) **Massivholztüre**
Solid wood door
Porte en bois massif

(30) Priorität: 06.10.1994 DE 9416108 U
(43) Veröffentlichungstag der Anmeldung: 24.04.1996
(73) Patentinhaber: Teisendorf Türen Johann Haunerdinger, 83317 Teisendorf (DE)
(72) Erfinder: Haunerdinger, Johann, D-83317 Teisendorf (DE)
(74) Vertreter: Haft, von Puttkamer, Berngruber, Czybulka

(56) Entgegenhaltungen:
- EP-A- 0 239 967
- GB-A- 409 532
- GB-A- 526 642
- GB-A- 2 141 164
- US-A- 2 020 044
- US-A- 3 168 763
- US-A- 3 994 110

## Beschreibung

Türen üblicher Bauart sind entweder als furnierte Türen oder als Massivholztüren erhältlich. Furnierte Türen weisen eine unter Verwendung von formaldehydhaltigen Kunstharzen hergestellte Waben-, Röhrenspan- oder Vollspaninnenlage auf, die mit entsprechenden Deckplatten versehen ist. Diese Türen haben den Nachteil, daß sie Formaldehyd abgeben und damit gesundheitsschädlich sind. Massivholztüren werden als Rahmentüre gefertigt und besitzen daher keine glatte Oberfläche.

Aus der US-A-3,165,792 ist eine Massivholztür bekannt, die eine Mittelschicht aus von oben nach unten verlaufenden Leistenaufweist, die stabparkettartig zusammengefügt sind. Sie wird von einem Rahmen aus den beiden Massivholzleisten an den Türlängskanten sowie zwei Massivholzleisten an der oberen und der unteren Türkante umschlossen, wobei die obere und die untere Massivholzleiste des Rahmens mit den Massivholzleisten an den Seitenkanten durch schwalbenschwanzförmige Zapfen verbunden sind.

Innerhalb dieses Rahmens ist ein Unterfurnier auf beiden Türseiten auf die Mittelschicht geleimt, welches quer zu den Leisten der Mittelschicht verläuft, und auf das Unterfurnier als Decklage ein Oberflächenfurnier, das parallel zu den Leisten der Mittelschicht verläuft und den Rahmen abdeckt.

Für die Absperrung der Mittelschicht werden also zwei Furnierschichten auf jeder Türseite verwendet. Auch dient der Rahmen dazu, ein Eindringen von Feuchtigkeit und damit ein Aufquellen der Mittelschicht zu verhindern.

Das Oberflächenfurnier hat den Nachteil, daß es bei einer Renovierung nicht nachgeschliffen werden kann. Auch läßt sich nicht verhindern, daß sich der Rahmen im Oberflächenfurnier abzeichnet. Dies gilt insbesondere bei gefalzten Türen, da die Abfalzung des Rahmens möglichst breit gestaltet sein muß, damit beim Abfalzen nicht das Oberflächenfurnier angefräßt wird. Auch lassen sich Farbabweichungen zwischen dem Oberflächenfurnier und dem Rahmen kaum vermeiden. Darüber hinaus erfordert die Herstellung der stabparkettartigen Mittelschicht, des Rahmens und der Furnierschichten einen erheblichen Arbeitsaufwand.

Aus US-A-2020044 ist eine Massivholztür nach dem Oberbegriff des Anspruchs 1 bekannt. Die Mittelschicht ist dabei aus verleimten Abfallholzklötzchen gebildet und wird von einem Rahmen umschlossen, der neben seiner tragenden Funktion ein Verziehen der Tür in Türblattebene verhindern soll. Um ein Verziehen in dazu senkrechter Richtung zu verhindern, ist ein Binderstreifen mit einer Nut/Federverbindung zwischen der Mittelschicht und den senkrechten Leisten des Rahmens vorgesehen. Die Decklagen werden aus Furnierstreifen gebildet. Die bekannte Tür ist mit einem hohen Herstellungsaufwand verbunden.

Aus GB-A-2141164 ist eine Massivholztür bekannt, deren Mittelschicht aus aufeinanderliegenden, miteinander verleimten Brettern und jeweils zwei aufgeleimten Brettern an den Türlängskanten besteht. Die Mittelschicht und die Bretter an den Türlängskanten werden durch ein Furnier abgedeckt.

Aufgabe der Erfindung ist es, eine ökologisch einwandfreie, einfach herstellbare Tür mit glatter Innen- und Außenseite und einem ansprechenden Aussehen bereitzustellen.

Dies wird erfindungsgemäß mit der im Anspruch 1 gekennzeichneten Tür erreicht. In den Unteransprüchen sind vorteilhafte Ausgestaltungen der erfindungsgemäßen Türe angegeben.

Nach der Erfindung besteht die Mittelschicht aus querverlaufenden, also waagrechten, aufeinanderliegenden, miteinander verleimten, durchgehenden Massivholzleisten mit rechteckigem Querschnitt. Die Mittelschicht schließt die Tür oben und unten ab. D.h., die obere und die untere Türkante werden durch die oberste bzw. unterste Leiste der Mittelschicht gebildet. Die Herstellung eines Rahmens entfällt damit. Die Mittelschicht kann aus Massivholzleisten hergestellt werden, die lediglich eine Länge entsprechend dem Abstand zwischen den beiden Massivholzleisten an den Türseitenkanten zu besitzen brauchen.

Die senkrecht verlaufenden Massivholzbretter der beiden Decklagen der erfindungsgemäßen Tür erstrecken sich quer zu den Leisten der Mittelschicht und decken die Massivholzleisten ab. Sie führen damit zu einer einwandfreien Absperrrung. Auf ein zusätzliches Absperrfurnier kann daher erfindungsgemäß verzichtet werden.

Durch die aus Massivholzleisten bestehenden Decklagen können sich die verdeckten Massivholzleisten an den Türseitenkanten nicht abzeichnen. Im Gegensatz zu furnierten Türen, die an ihrer gleichmäßigen Holzstruktur erkennbar sind, entsteht durch die Massivholzbretter der beiden Decklagen der erfindungsgemäßen Tür das Bild einer Massivholz-Tür. Andere Einrichtungsgegenstände aus Massivholz passen sich damit der Tür an. Demgegenüber ist bei furnierten Türen die Gefahr gegeben, daß krasse Farbunterschiede auftreten, da Furniere durch die Vorbehandlung vor dem Messern bzw. Schälen Farbabweichungen zum Massivholz aufweisen. Außerdem lassen sich die erfindungsgemäßen Türblätter problemlos mehrmals abschleifen.

Durch die Querverleimung der Massivholzbretter zu den Leisten der Mittelschicht wird außerdem das bekannte "Welligwerden" ausgeschlossen. Zudem wird durch die Decklagen aus Massivholzbrettern ein Leimdurchschlag bei der Verarbeitung ausgeschlossen, ebenso die Bildung von Fehlverleimungen (Kürschnern) in der Fläche. Durch die aus Massivholzbrettern bestehenden Decklagen wird auch bei porigen Hölzern, beispielsweise Eiche, verhindert, daß bei Feuchtigkeitseintritt in die Poren sich die Decklage löst, wie dies bei furnierten Türen möglich ist.

Durch die massive Ausführung der Decklagen hat der Verarbeiter darüberhinaus die Möglichkeit, die Fläche so zu gestalten, z.B. Adern einzufräsen, bündige oder zurückspringende Glas- oder Füllungsleisten einzubauen, die Flächen zu schnitzen, zu schrubben, zu bürsten und dergleichen, was bisher nicht möglich war. Die erfindungsgemäße Tür generiert damit eine Vielzahl von neuen Gestaltungsmöglichkeiten. Auch ist die erfindungsgemäße Tür auf einfache Weise herstellbar. So kann das Verpressen der Decklagen in der Breite mit dem Verpressen der Mittelschicht verbunden werden.

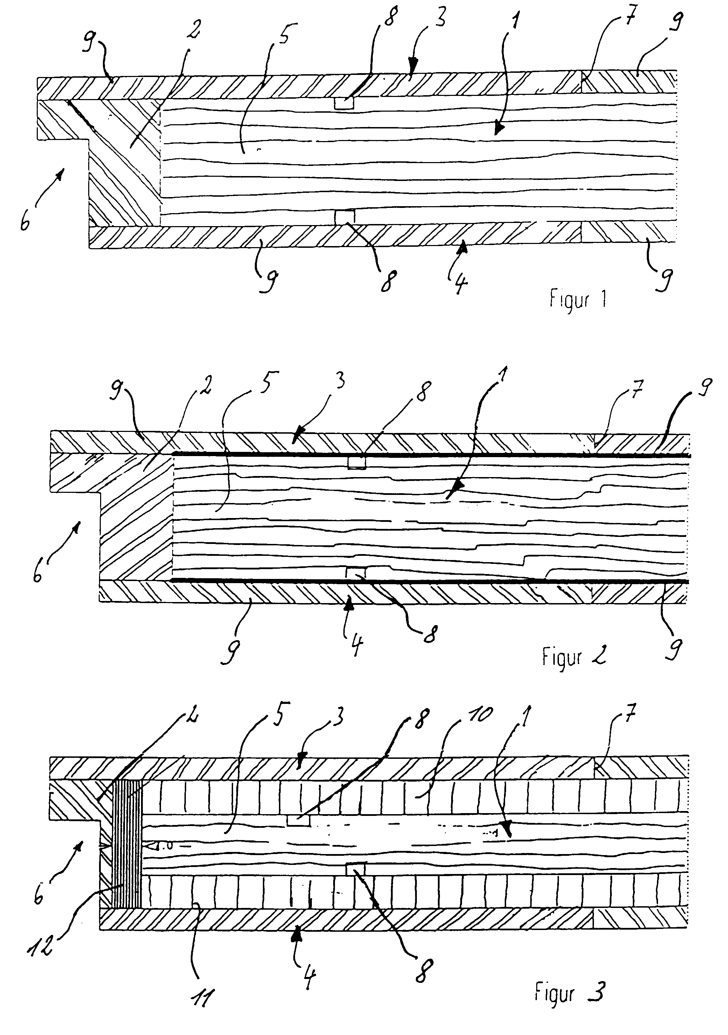

Nachstehend sind drei Ausführungsformen der erfindungsgemäßen Türe anhand der Zeichnung näher erläutert. Darin zeigen
- Fig. 1 bis 3: jeweils einen Querschnitt durch einen Bereich der linken Türlängskante für jeweils eine andere Ausführungsform der Tür, jeweils etwa maßstabsgetreu dargestellt.

Gemäß Fig. 1 besteht die Tür aus einer Mittelschicht 1, einer Massivholzleiste 2 an der linken Türlängskante und einer nicht dargestellten Massivholzleiste an der rechten Türlängskante sowie Decklagen 3 und 4 an der Türinnen- bzw. -außenseite. Die Massivholzleisten 2 sind auf die Mittelschicht 1 aufgeleimt.

Die Mittelschicht 1 wird durch eine blockverleimte Platte gebildet, also durch eine Platte, die aus aufeinanderliegenden, miteinander verleimten, durchgehenden, gehobelten Leisten 5 aus Massivholz besteht. Die im Querschnitt rechteckigen Leisten 5 der Mittelschicht 1 können eine Stärke von ca. 25 bis 33 mm und eine Breite von ca. 20 bis 40 mm aufweisen.

Die miteinander verleimten Leisten 5 erstrecken sich, wie in Fig. 1 bis 3 dargestellt, von einer, also der linken Massivholzleiste 2 zur Massivholzleiste an der anderen Längskante, also der rechten Längskante, waagrecht und parallel zur Türblattebene. Die Massivholzleisten 2 sind auf die Stirnflächen der Leisten 5 der Mittelschicht 1 aufgeleimt. Die oberste Leiste 5 der Mittelschicht bildet die obere Türkante, die unterste Leiste 5 die untere Türkante.

Die durch die Decklagen 3, 4 verdeckten Massivholzleisten 2 weisen eine rechtwinklige Ausnehmung 6 für den Türfalz auf. Die Ausnehmung 6 kann nachträglich in die aufgeleimten Massivholzleisten 2 eingefräst werden.

Auf die Massivholzleisten 2 - und bei der Ausführungsform nach Fig. 1 auch unmittelbar auf die Mittelschicht 1 - werden die Decklagen 3, 4 vollflächig aufgeleimt, die aus breiten verleimten Massivholz-Brettern 9 bestehen, die sich senkrecht von oben nach unten erstrecken. Es liegt eine Fugenverleimung 7 vor. Die Massivholz-Bretter 9 weisen eine Breite von 5 bis 20 cm und eine Dicke von 4 bis 10 mm auf. Damit wird eine über das gesamte Türblatt glatte Außen- und Innenseite erhalten. Die Außen- und Innenseite kann freilich nachträglich mit Ausfräsungen versehen oder in anderer Weise bearbeitet werden.

An der den Decklagen 3, 4 zugewandten Seite weist die Mittelschicht 1 Lüftungsnuten 8 auf, die ein Verziehen der Tür verhindern.

In die Tür werden ihrem Gewicht entsprechende handelsübliche Türbänder eingebaut.

Gemäß Fig. 2 ist zwischen der Mittelschicht 1 und den Decklagen 3, 4 eine Dampfsperrschicht 9 vorgesehen. Dabei kann es sich um eine sogenannte Aluphenol-Schicht handeln, d.h. eine Platte aus einer Aluminiumkernschicht, die beidseitig mit einer Papierschicht versehen ist, welche mit einem Phenolharz getränkt ist. Durch die Dampfsperrschicht 9, die eine Dicke von 1 bis 2 mm aufweisen kann, wird die Stabilität der Tür wesentlich erhöht.

Falls die Tür als Strahlenschutztür ausgebildet werden soll, kann statt oder zusätzlich zur Dampfsperrschicht 9 eine Strahlenschutzplatte vorgesehen sein, beispielsweise eine Bleiplatte.

Die Tür nach Fig. 3 ist für erhöhte Brandschutzanforderungen ausgelegt. Sie weist dazu zwischen der blockverleimten Mittelschicht 1 und den Decklagen 3, 4 je eine Brandschutzplatte 10, 11 auf, z.B. eine Promat-Platte. Weiterhin ist zwischen den Massivholzleisten 2, die dazu entsprechend ausgefräst sein können, und der Mittelschicht 1 ein Streifen 12 aus Palusol oder ein Brandschutzmaterial vorgesehen.

Die Tür kann zusätzlich nach den geforderten Brandschutzvorschriften ein Schloß nach DIN 18250, Fräsbänder und einen Türschließer nach DIN 18263 aufweisen.

Die erfindungsgemäße Tür ist für alle Größen von 500 bis 1120 mm in der Breite, 1000 bis 2120 mm in der Höhe und 39 bis 70 mm in der Dicke geeignet. Die erfindungsgemäße Tür paßt in die handelsüblichen Zargen nach DIN 18100.

Die erfindungsgemäße Tür kann im Objektbereich, wo Stabilität gefordert wird, gegebenenfalls auch zum Strahlen- bzw. Röntgen- oder Brandschutz, eingesetzt werden. Sie entspricht dabei allen Anforderungen einer ökologisch wertvollen Tür. Zudem bietet sie die Möglichkeit einer individuellen Flächengestaltung.

Bei der erfindungsgemäßen Tür können zwischen der Mittelschicht 1 und den Decklagen 3 und 4 und/oder dem Anleimer 2 noch andere Schichten vorgesehen sein. Insbesondere braucht der Anleimer 2, wie aus Fig. 3 ersichtlich, nicht direkt mit den Leisten 5 verleimt sein.

Bei dem Brandschutzmaterial 12 kann es sich um ein bei Erwärmung aufschäumbares Material handeln. Ein solches Material ist im Handel beispielsweise unter dem Warenzeichen "Pallusol" erhältlich. Im Brandfall schäumt dieses Material auf, so daß der Streifen 12 die Leiste 2 in diesem Bereich nach außen gegen den Falz der Zarge drückt und damit die Tür hermetisch abdichtet.

Die Herstellung der erfindungsgemäßen Tür kann folgendermaßen erfolgen:

Für die Mittelschicht 1 werden gleichmäßig getrocknete Holzleisten mit einer Holzfeuchtigkeit von z.B. 8 bis 12% gehobelt. Die Leisten werden dann verleimt und verpreßt. Die gebildete blockverleimte Platte wird bündig gehobelt oder mit einer Breitbandschleifmaschine kalibriert und dann auf Format geschnitten.

Anschließend werden die gehobelten Massivholzleisten 2 auf die seitlichen Stirnflächen der Mittelschicht 1 geleimt. Gegebenenfalls können dazu in die Stirnflächen der blockverleimten Mittelschicht 1 eine Feder gefräst und die Massivholzleisten 2 mit entsprechenden Nuten versehen werden. Der Leim wird punktweise in die Nut gegeben, und dann die Massivholzleisten 2 an die Mittelschicht 1 geklopft. Danach werden die Lüftungsnuten 8 in die Mittelschicht 1 gefräst.

Die Bretter 9 für die Decklagen 3 und 4 können beispielsweise durch Spalten von Bohlen mit einer Säge erhalten werden. Die Bretter werden dann aufeinandergelegt und zur Fugenverleimung seitlich mit Leim bestrichen. Anschließend werden die Bretter 9 auf die Mittelschicht 1 mit den daran befestigten Massivholzleisten 2 gelegt und die Fugenverleimung 7 und die Flächenverleimung, also die Verleimung der Bretter 9 an der Mittelschicht 1 sowie den Massivholzleisten 2, mit einer Presse gegebenenfalls in einem Arbeitsgang durchgeführt. Danach werden die Bretter 9 formatiert. Der so hergestellte Türrohling wird z.B. mit einer Breitbandschleifmaschine feingeschliffen (kalibriert). Der Falz 6 kann entweder beim Türhersteller oder beim Verarbeiter der Tür angebracht werden. Gleiches gilt für die Fräsbänder und das Schloß.

## Patentansprüche

1. Massivholztür, die eine Mittelschicht (1) aus Holz, mit der Mittelschicht (1) verleimte Massivholzleisten (2) an den beiden Turlängskanten sowie eine Decklage (3, 4) auf der Türinnen- und -außenseite aufweist, welche die Massivholzleisten (2) an den Türlängskanten mitabdecken, dadurch gekennzeichnet, daß die Mittelschicht (1) aus durchgehenden Leisten (5) mit einer dem Abstand zwischen den Massivholzleisten (2) an den beiden Türlängskanten entsprechenden Länge durch miteinander Verleimen und Verpressen der Leisten (5) hergestellt ist, die Mittelschicht (1) die Tür oben und unten abschließt und die Decklagen (3, 4) aus sich von oben nach unten erstreckenden Brettern (9) bestehen.

2. Massivholztür nach Anspruch 1, dadurch gekennzeichnet, daß die Mittelschicht (1) auf ihrer den Decklagen (3, 4) zugewandten Seite mit Lüftungsnuten (8) versehen ist.

3. Massivholztür nach Anspruch 2, dadurch gekennzeichnet, daß sich die Lüftungsnuten (8) von unten nach oben erstrecken.

4. Massivholztür nach einem der vorstehenden Ansprüche, dadurch gekennzeichnet, daß zwischen der Mittelschicht (1) und wenigstens einer Decklage (3, 4) wenigstens eine weitere Schicht vorgesehen ist.

5. Massivholztür nach Anspruch 4 dadurch gekennzeichnet, daß die weitere(n) Schicht(en) eine Dampfsperrschicht (9) und/oder eine Brandschutzschicht (10, 11) und/oder eine Strahlenschutzschicht ist.

## Claims

1. A solid wood door having a middle layer (1) of wood, solid wood laths (2) glued to the middle layer (1) on the two longitudinal edges of the door, and top layers (3, 4) on the inside and outside of the door and also covering the solid wood laths (2) on the longitudinal edges of the door, characterized in that the middle layer (1) is produced from continuous laths (5) having a length corresponding to the distance between the solid wood laths (2) on the two longitudinal edges of the door by gluing and pressing the laths (5) together, the middle layer (1) closes off the door at the top and bottom, and the top layers (3, 4) consist of boards (9) extending from the top to the bottom.

2. The solid wood door of claim 1, characterized in that the middle layer (1) is provided with ventilation grooves (8) on its side facing the top layers (3, 4).

3. The solid wood door of claim 2, characterized in that the ventilation grooves (8) extend from the bottom to the top.

4. The solid wood door of any of the above claims, characterized in that at least one further layer is provided between the middle layer (1) and at least one top layer (3, 4).

5. The solid wood door of claim 4, characterized in that the further layer or layers are a vapor barrier layer (9) and/or a fire barrier layer (10, 11) and/or a radiation protection layer.

## Revendications

1. Porte en bois massif qui présente une couche médiane (1) en bois, des baguettes (2) de bois massif collées avec la couche médiane (1) sur les deux arêtes longitudinales de la porte ainsi qu'une couche superficielle (3, 4) sur les faces intérieure et extérieure qui recouvrent en même temps les baguettes (2) de bois massif sur les arêtes longitudinales de la porte, caractérisée en ce que la couche médiane (1) est réalisée par deux listeaux (5) continus avec une longueur correspondant à l'écartement entre les baguettes (2) de bois massif sur les deux arêtes longitudinales de la porte, lesdits listeaux (5) étant collés et pressés l'un avec l'autre, en ce que la couche médiane (1) recouvre le haut et le bas de la porte et en ce que les couches superficielles (3, 4) sont constituées par des planches (9) s'étendant de haut en bas.

2. Porte en bois massif selon la revendication 1, caractérisée en ce que sur son côté tourné vers les couches superficielles (3, 4), la couche médiane (1) est pourvue de rainures d'aération (8).

3. Porte en bois massif selon la revendication 2, caractérisée en ce que les rainures d'aération (8) s'étendent de bas en haut.

4. Porte en bois massif selon l'une quelconque des revendications précédentes, caractérisée en ce qu'il est prévu au moins une autre couche entre la couche médiane (1) et au moins une couche superficielle (3, 4).

5. Porte en bois massif selon la revendication 4, caractérisée en ce que l'autre (les autres) couche(s) est (sont) une couche étanche à la vapeur d'eau (9) et/ou une couche ignifuge (10, 11) et/ou une couche de protection contre les rayonnements.
